# EUROPÄISCHE PATENTSCHRIFT

(11) **EP 2 372 312 B1**
(45) Veröffentlichungstag und Bekanntmachung des Hinweises auf die Patenterteilung: **20.11.2013**
(21) Anmeldenummer: 10003522.9
(22) Anmeldetag: 31.03.2010
(51) Int. Cl.: G01D 5/244

(54) **Feedback-Anordnung und Feedback-Verfahren zur Regelung eines Servomotors**
Feedback assembly and feedback method for regulating a servomotor
Agencement de feedback et procédé de feedback destinés au réglage d'un servomoteur

(43) Veröffentlichungstag der Anmeldung: 05.10.2011
(73) Patentinhaber: SICK STEGMANN GmbH, 78166 Donaueschingen (DE)
(72) Erfinder: Siraky, Josef, 78166 Donaueschingen (DE); Armbruster, Ulrich, 78166 Donaueschingen (DE)
(74) Vertreter: Patentanwälte Westphal, Mussgnug & Partner

(56) Entgegenhaltungen:
- EP-A1- 0 334 541
- GB-A- 2 252 845
- US-A- 5 304 907
- US-A1- 2003 076 060

## Beschreibung

Die Erfindung betrifft eine Feedback-Anordnung und ein Feedback-Verfahren zur Regelung eines Servomotors.

Für die Regelung von elektrischen Servomotoren werden Feedback-Systeme eingesetzt. Diese haben die Aufgabe, die für die Regelung der Drehzahl und der Winkelpositionierung notwendigen Ist-Informationen bereitzustellen.

Bekannte Feedback-Systeme verwenden Drehwinkelmessgeräte (Encoder), die die Drehwinkelposition absolut oder inkremental messen. Die heute üblichen Drehwinkelmessgeräte weisen eine Maßteilung auf, die optisch, magnetisch, induktiv oder kapazitiv abgetastet wird. Die Abtastung liefert dabei jeweils ein Sinus- und ein Cosinussignal, die eine Interpolation der Maßteilung ermöglichen. Bei solchen Drehwinkelmessgeräten sind heute Maßteilungen mit 1024 bzw. 2048 Perioden pro Umdrehung üblich. Eine Interpolation ist dabei bis zu 14 bit pro Periode möglich. Dadurch ergibt sich eine Winkelauflösung der Drehwinkelmessgeräte von bis zu 25 bit pro Umdrehung.

Die Genauigkeit der mit dieser hohen Auflösung gemessenen Drehwinkelmesswerte hängt von der Präzision der Maßteilung ab. Um die Drehzahl des Servomotors zu regeln wird die IstDrehzahl ermittelt, indem die Differenz der Drehwinkelmesswerte gebildet wird. Fehler in der differenziellen und integralen Linearität der Maßteilung führen daher in verstärktem Maße zu Fehlern in den von dem Feedback-System ausgegebenen Drehzahl-Ist-Werten. Insbesondere wenn der Regler mit hoher Steifigkeit eingestellt ist, d. h. sehr schnell auf Änderungen des Ist-Wertes reagiert, kann dies von Nachteil sein. Auch wenn der Servomotor an sich mit der Soll-Drehzahl läuft, werden nämlich durch die Nichtlinearität der Drehwinkelmessung vorgetäuschte scheinbare Drehzahlschwankungen durch Beschleunigungen und Abbremsungen des Servomotors ausgeregelt, was insbesondere bei größeren angetriebenen Massen zu beträchtlichen Energieverluste führen kann. Dieser Nachteil kann bei herkömmlichen Drehwinkelmessgeräten nur durch eine Verbesserung der differenziellen und integralen Linearität der Maßteilung verringert werden, was die Herstellung der Maßteilung erheblich verteuert.

Heute übliche Feedback-Systeme, die solche Drehwinkelmessgeräte verwenden, arbeiten zuverlässig bei Drehzahlen bis etwa 12.000 Umdrehungen pro Minute (UPM). Im Bereich niedriger Drehzahlen, beispielsweise bei Drehzahlen < 5 UPM wird die Ermittelung des Drehzahl-Ist-Wertes durch Differenzbildung der Drehwinkelpositionswerte ungenau, da sich die Winkelauflösung der Interpolation der Teilungsperioden verringert.

Weiter ist es bekannt, zur Messung der Drehzahl rotierender Objekte Drehratensensoren zu verwenden. Solche Drehratensensoren sind vorzugsweise als optische Gyroskope ausgebildet, z. B. als faseroptische Gyroskope (Faserkreisel) oder als Ringlaser (Laserkreisel). Bei solchen optischen Gyroskopen wird die Laufzeitdifferenz zwischen einem in Drehrichtung laufenden und einem gegen die Drehrichtung laufenden Laserstrahl zur Ermittlung der Drehgeschwindigkeit ausgenützt. Wie z. B. in der EP 585 954 B1 dargestellt ist, werden die beiden Laserstrahlen zur Interferenz gebracht, wobei die Verschiebung des Interferenzmusters den Messwert für die Drehgeschwindigkeit liefert. Solche Drehratensensoren und insbesondere optische Gyroskope ermöglichen eine sehr präzise Drehzahlmessung. Die Drehzahl kann beispielsweise mit einer Auflösung von < 10⁻³ UPM gemessen werden. Über eine zeitliche Integration der Drehzahlmesswerte kann die Drehwinkelposition mit entsprechender Genauigkeit ermittelt werden.

Ein Problem bei optischen Gyroskopen ergibt sich daraus, dass deren Messwerte von dem Inertialsystem abhängig sind, in welchem das Gyroskop eingesetzt wird. In jedem Falle hat somit die Erdrotation einen Einfluss auf den Drehzahlmesswert und in vielen Anwendungsfällen auch eine eventuelle Rotation der Maschine oder der Apparatur, in welcher das Gyroskop eingesetzt wird. Diese Einflüsse müssen bei der Ermittlung des Drehzahlmesswertes korrigiert werden. Ein weiteres Problem besteht darin, dass solche Gyroskope häufig ein erhebliches Driftverhalten aufweisen.

Die Messung der Drehgeschwindigkeit über eine Verschiebung des optischen Interferenzmusters, also über eine Änderung der Lichtintensität, hat zur Folge, dass die Messung bei höheren Drehgeschwindigkeiten schwierig wird. Der Messbereich solcher optischer Gyroskop ist daher bei maximal etwa 100 UPM begrenzt.

Aus der EP 0 334 541 A1 ist eine Feedback-Anordnung und ein Feedback-Verfahren zur Regelung eines Servomotors bekannt, bei welchem die durch einen Drehwinkelsensor gemessenen Drehwinkelmesswerte einer Rechnereinheit zugeführt werden. Die Rechnereinheit weist einen Mikroprozessor auf, in welchem die Drehwinkelmesswerte mit gespeicherten Drehwinkelwerten verglichen werden, um Drehwinkel-Korrekturwerte zu berechnen, die den der Regelung zugeführten Drehwinkel-Ist-Werten zur Kalibrierung analog überlagert werden. Die gespeicherten Drehwinkelwerte werden in einer vorgelagerten Präzisionsmessung z.B. mittels eines Laser-Interferometers ermittelt.

Aus der GB 2 252 845 A ist ein Feedback-System zur Regelung eines Servomotors bekannt, bei welchem die Ist-Drehzahl mittels eines Gyroskops gemessen wird.Zur Ermittlung des Drehwinkel-Ist-Werts wird die mittels des Gyroskops ermittelte Drehrate integriert.

Aus der US 5,304,907 A ist ein Feedback-System für einen Servomotor bekannt, bei welchem ein Drehwinkelsensor und ein Drehratensensor den Drehwinkel und die Drehrate messen. Messfehler des Drehratensensors werden zu jedem Drehwinkelwert ermittelt und gespeichert. Die mittels dieser gespeicherten Werte korrigierten Drehzahl-Ist-Wert werden der Regelung zugeführt.

Aus der US 2003/0076060 A1 ist es bekannt, die elektronische Kommutierung eines Elektromotors durch einen Drehwinkelsensor zu steuern, wobei ein Offset des Drehwinkelwertes mittels gespeicherter Werte kalibriert wird.

Der Erfindung liegt die Aufgabe zu Grunde, ein Feedback-System, d. h. eine Feedback-Anordnung bzw. ein Feedback-Verfahren zur Regelung eines Servomotors zur Verfügung zu stellen, welches den Regelbereich verbessert und erweitert.

Diese Aufgabe wird erfindungsgemäß gelöst durch eine Feedback-Anordnung mit den Merkmalen des Patentanspruchs 1 bzw. durch ein Feedback-Verfahren mit den Merkmalen des Patentanspruchs 7.

Vorteilhafte Ausführungen der Erfindung sind in den Unteransprüchen angegeben.

Die Erfindung stellt ein Feedback-System zur Verfügung für die Regelung der Drehwinkelpositionierung und/oder der Drehzahl eines elektrischen Servomotors. Das Feedback-System generiert einen Ist-Wert, der dem Regler des Servomotors zugeführt wird. Je nach der Ausbildung der Schnittstelle zwischen dem Feedback-System und dem Regler des Servomotors kann der Ist-Wert als Drehzahlinformation oder als Drehwinkelinformation bereitgestellt werden. Wird eine Drehwinkelinformation übertragen, so kann diese im Regler nach der Zeit differenziert werden, um die Drehzahlinformation zu erhalten.

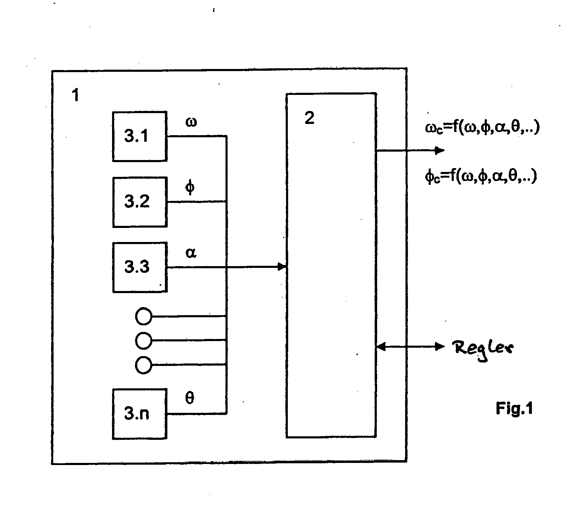

Wie in Figur 1 schematisch dargestellt ist, weist das Feedback-System eine Feedback-Anordnung 1 auf, die eine elektronische Rechnereinheit 2 einschließt. Weiter weist die Feedback-Anordnung 1 zumindest einen Drehratensensor 3.1 und einen Drehwinkelsensor 3.2 auf. Der Drehratensensor 3.1 liefert einen Drehzahlmesswert ω an die Rechnereinheit 2. Der Drehwinkelsensor 3.2 liefert einen Drehwinkelmesswert ϕ an die Rechnereinheit 2.

Der Drehratensensor 3.1 ist vorzugsweise als optisches Gyroskop ausgebildet, z.B. als faseroptisches Gyroskop oder als Ringlaser. Ein faseroptische Gyroskop wird vorzugsweise verwendet wegen seiner hohen Auflösung und Messgenauigkeit, seiner Robustheit, seiner kompakten Bauform bei geringem Gewicht, seiner einfachen Montagemöglichkeit, seiner hohen Lebensdauer und seiner Wartungsfreiheit. Der Drehratensensor 3.1 liefert einen Drehzahlmesswert ω mit einer hohen Drehzahlauflösung, die z. B. etwa 10⁻³ UPM betragen kann. Der Messbereich, in welchem der Drehratensensor 3.1 zuverlässig arbeitet liegt zwischen 0 UPM und maximal etwa 100 UPM.

Der Drehwinkelsensor 3.2 ist vorzugsweise ein Drehwinkelencoder mit einer periodischen Maßteilung. Die Maßteilung kann etwa 1024 oder 2048 Perioden aufweisen. Die Abtastung der Maßteilung liefert jeweils ein Sinus- und ein Kosinussignal pro Periode. Die Sinus- und Kosinussignale können jeweils mit einer Auflösung von bis zu 14 bit pro Periode interpoliert werden. Damit ergibt sich ein der Rechnereinheit 2 zugeführter Drehwinkelmesswert ϕ mit einer Auflösung von 24 bis 25 bit pro Umdrehung.

Die Rechnereinheit 2 generiert auf folgende Weise den Ist-Wert für den Regler des Servomotors. Bei niedrigen Drehzahlen von beispielsweise weniger als 5 UPM wird der Drehzahlmesswert ω über die Zeit integriert, um einen Referenzdrehwinkel zu ermitteln. Dieser Referenzdrehwinkel weist die hohe Auflösung und Genauigkeit des optischen Gyroskops auf. Die mittels des Drehwinkelsensors 3.2 gemessenen Drehwinkelmesswerte ϕ werden in der Rechnereinheit 2 mit den Referenzdrehwinkeln verglichen, um Drehwinkel-Korrekturwerte zu ermitteln, die in der Rechnereinheit 2 gespeichert werden. Die Drehwinkel-Korrekturwerte dienen zur Kalibrierung der von dem Drehwinkelsensor 3.2 gelieferten Drehwinkelmesswerte ϕ.

Die zeitliche Integration des Drehzahlmesswertes w zur Ermittlung des Drehwinkels stellt das mathematische Grundprinzip des in der Rechnereinheit 2 verwendeten Algorithmus dar. Dabei können im Rahmen der Erfindung jedoch zusätzlich Korrekturen vorgenommen werden, die eventuelle Abweichungen von einer reinen Integration berücksichtigen.

Die Rechnereinheit 2 kann somit als Ist-Wert kalibrierte Drehwinkelwerte ϕ_{c} ausgeben. Diese kalibrierten Drehwinkelwerte ϕ_{c} entsprechen den Drehwinkelmesswerten ϕ des Drehwinkelsensors 3.2, wobei jedoch die differenziellen und integralen Linearitätsfehler des Drehwinkelsensors 3.2 durch die Kalibrierung mit den Korrekturwerten reduziert sind. Die Drehwinkelinformation des Ist-Wertes ϕ_{c} weist somit eine Linearität auf, die der Genauigkeit der integrierten Drehzahlmesswerte ω des optischen Gyroskops entspricht.

Für hohe Drehzahlen oberhalb von etwa 5 bis 10 UPM wird der kalibrierte Drehwinkelwert ϕ_{c} als Ist-Wert für die Regelung verwendet. Zur Regelung der Winkelposition dient dieser kalibrierte Drehwinkelwert ϕ_{c} direkt als Ist-Wert, für die Regelung der Drehzahl wird der kalibrierte Drehwinkelwert ϕ_{c} nach der Zeit differenziert, um einen kalibrierten Drehzahlwert ω_{c} zu erhalten.

Bei niedrigen Drehzahlen kleiner als etwa 5 bis 10 UPM wird der durch den Drehratensensor 3.1 gemessene Drehzahlmesswert ω als Drehzahl-Ist-Wert für die Drehzahlregelung zur Verfügung gestellt. Bei diesen niedrigen Drehzahlen wird außerdem der über die Zeit integrierte Drehzahlmesswert ω des Drehratensensors 3.1 zur Interpolation der Teilungsperioden des Drehwinkelmesswertes ϕ verwendet. Bei diesen niedrigen Drehzahlen kann somit auch ein Drehwinkel-Ist-Wert mit der hohen Auflösung des Drehratensensors 3.1 zur Verfügung gestellt werden. Da der Drehzahlmesswert hierbei nur zur Interpolation der Teilungsperioden des Drehwinkelmesswertes ϕ verwendet wird, können Offsets auf Grund eines rotierenden Inertialsystems und Drifts des Drehratensensors 3.1 unberücksichtig bleiben.

Der Übergang von der Verarbeitung der Drehzahlmesswerte ω des Drehratensensors 3.1 bei niedrigen Drehzahlen zur Verarbeitung der Drehwinkelmesswerte ϕ des Drehwinkelsensors 3.2 bei hohen Drehzahlen erfolgt in der Rechnereinheit 2 vorzugsweise kontinuierlich. In einem Übergangsbereich werden in der Rechnereinheit 2 die Drehzahlmesswerte ω mit den Drehwinkelmesswerten ϕ verrechnet, um die kontinuierliche Anpassung der Messbereiche sicherzustellen.

Selbstverständlich können in der Rechnereinheit 2 auch noch weitere Kenngrößen berücksichtigt werden. Beispielsweise kann zusätzlich ein Drehbeschleunigungssensor 3.3 einen Beschleunigungsmesswert α der Rechnereinheit 2 zuführen. Ein solcher Beschleunigungssensor 3.3 könnte auch optional anstelle des Drehratensensors 3.1 verwendet werden, wobei dann eine zeitliche Integration des Drehbeschleunigungsmesswertes α erforderlich ist, um die Drehzahl zu ermitteln. Weiter kann beispielsweise ein Temperatursensor 3.n einen Temperaturmesswert θ als zusätzliche Kenngröße der Rechnereinheit 2 zuführen. Auch Kenngrößen des Servomotors, wie z.B. dessen Drehmoment und Leistung können in der Rechnereinheit 2 verarbeitet werden.

Das erfindungsgemäße Feedback-System verbessert durch die Kalibrierung mittels des Drehratensensors die differenzielle und die integrale Linearität für die Drehzahlregelung im gesamten Drehzahlbereich.

Für die Winkelpositionierung steht der kalibrierte Drehwinkelwert mit der Auflösung des Drehwinkelsensors 3.2 zur Verfügung, wobei die Genauigkeit des Drehwinkelwertes durch die Kalibrierung verbessert ist.

Bei niedrigen Drehzahlen steht der hochgenaue Drehzahlmesswert des Drehratensensors 3.1 als Drehzahl-Ist-Wert zur Verfügung.

Auch in diesem Bereich der niedrigen Drehzahlen steht ein Drehwinkel-Ist-Wert zur Verfügung, dessen Auflösung durch die Genauigkeit des Drehratensensors bestimmt ist.

Die Erfindung ermöglicht somit eine Verbesserung der Regelung eines Servomotors insbesondere bei hohen Drehzahlen. Die Linearität der Drehzahlmessung wird verbessert, ohne dass hierzu eine Verbesserung der Genauigkeit der Maßteilung erforderlich ist. Dadurch lässt sich eine höhere Steifigkeit des Reglers einstellen. Das erfindungsgemäße Feedback-System erweitert außerdem den Stellbereich der Regelung zu kleineren Drehzahlen.

## Patentansprüche

1. Feedback-Anordnung zur Regelung eines Servomotors mit zumindest einem Drehwinkelsensor (3.2) und zumindest einem Drehratensensor (3.1), wobei der Drehwinkelsensor (3.2) einen Drehwinkelmesswert (ϕ) einer Rechnereinheit (2) zuführt, in welcher Drehwinkel-Korrekturwerte gespeichert sind, wobei zur Regelung Drehwinkel-Ist-Werte und/oder Drehzahl-Ist-Werte zur Verfügung gestellt werden, die mittels der gespeicherten Drehwinkel-Korrekturwerte kalibriert werden,
**dadurch gekennzeichnet, dass** der Drehratensensor (3.2) einen Drehzahlmesswert (ω) der Rechnereinheit (2) zuführt, dass in der Rechnereinheit (2) der Drehzahlmesswert (ω) zur Bildung von Referenzdrehwinkeln integriert wird, dass die Referenzdrehwinkel mit den Drehwinkelmesswerten (ϕ) verglichen werden, um die Drehwinkel-Korrekturwerte zu berechnen, dass die Rechnereinheit (2) bei hohen Drehzahlen die kalibrierten Drehwinkelmesswerte und bei niedrigen Drehzahlen die entsprechend den integrierten Drehzahlmesswerten interpolierten Drehwinkelmesswerte als Drehwinkel-Ist-Werte zur Regelung zur Verfügung stellt und dass die Rechnereinheit (2) bei hohen Drehzahlen die nach der Zeit differenzierten kalibrierten Drehwinkelmesswerte und bei niedrigen Drehzahlen die Drehzahlmesswerte als Drehzahl-Ist-Werte zur Regelung zur Verfügung stellt.

2. Feedback-Anordnung nach Anspruch 1, bei welcher der Drehratensensor (3.1) ein optisches Gyroskop ist.

3. Feedback-Anordnungen nach Anspruch 2, bei welcher das optische Gyroskop ein faseroptisches Gyroskop ist.

4. Feedback-Anordnung nach einem der Ansprüche 1 bis 3, bei welcher der Drehwinkelsensor (3.2) eine periodische Maßteilung aufweist durch deren Abtastung Sinus- und Cosinussignale erzeugt werden, die zur Winkelauflösung interpoliert werden.

5. Feedback-Anordnung nach einem der vorhergehenden Ansprüche, bei welcher zusätzlich oder optional ein Drehbeschleunigungssensor (3.3) vorgesehen ist, der Drehbeschleunigungsmesswerte (α) der Rechnereinheit (2) zuführt.

6. Feedback-Anordnung nach einem der Ansprüche 1 bis 5, bei welcher zusätzlich ein Temperatursensor (3.n) vorgesehen ist, der Temperaturmesswerte (θ) der Rechnereinheit (2) zuführt.

7. Feedback-Verfahren zur Regelung eines Servomotors, bei welchem zumindest ein Drehwinkelmesswert und zumindest ein Drehzahlmesswert gemessen werden, bei welchem Drehwinkel-Korrekturwerte gespeichert werden, bei welchem die Drehwinkelmesswerte entsprechend den gespeicherten Drehwinkel-Korrekturwerten korrigiert werden und bei welchem Drehwinkel-Ist-Werte und/oder Drehzahl-Ist-Werte zur Regelung des Servomotors zur Verfügung gestellt werden,
**dadurch gekennzeichnet, dass** der Drehzahlmesswert zeitlich integriert wird, dass der zeitlich integrierte Drehzahlmesswert mit dem Drehwinkelmesswert verglichen wird, um jeweils die Drehwinkel-Korrekturwerte zu berechnen, dass die zur Regelung zur Verfügung gestellten Drehwinkel-Ist-Werte bei hohen Drehzahlen die korrigierten Drehwinkelmesswerte und bei niedrigen Drehzahlen die integrierten Drehzahlmesswerte sind und dass die zur Regelung zur Verfügung gestellten Drehzahl-Ist-Werte bei hohen Drehzahlen die nach der Zeit differenzierten korrigierten Drehwinkelmesswerte und bei niedrigen Drehzahlen die Drehzahlmesswerte sind.

## Claims

1. A feedback arrangement for regulating a servo motor with at least one rotary angle sensor (3.2) and at least one rotation rate sensor (3.1), wherein the rotary angle sensor (3.2) supplies a rotary angle measurement value (ϕ) to a calculator unit (2) in which rotary angle correction values are stored, wherein actual rotary angle values and/or actual rotational speed values which are calibrated by means of the stored rotary angle correction values are made available for regulation, **characterized in that** the rotary angle sensor (3.2) supplies a rotational speed measurement value (ω) to the calculator unit (2), the rotational speed measurement value (ω) is integrated in the calculator unit (2) to form reference rotary angles, the reference rotary angles are compared with the rotary angle measurement values (ϕ) in order to calculate the rotary angle correction values, at high speeds of rotation the calculator unit (2) makes available the calibrated rotary angle measurement values and at low speeds of rotation it makes available the rotary angle measurement values interpolated in a manner corresponding to the integrated rotational speed measurement values as actual rotary angle values for regulation, and at high speeds of rotation the calculator unit (2) makes available the calibrated rotary angle measurement values differentiated in accordance with the time and at low speeds of rotation it makes available the rotational speed measurement values as actual rotational speed values for regulation.

2. A feedback arrangement according to claim 1, in which the rotation rate sensor (3.1) is an optical gyroscope.

3. A feedback arrangement according to claim 2, in which the optical gyroscope is a fibre-optic gyroscope.

4. A feedback arrangement according to any one of claims 1 to 3, in which the rotary angle sensor (3.2) has a periodic scale, by the sensing of which sine and cosine signals are generated which are interpolated for angular resolution.

5. A feedback arrangement according to any one of the preceding claims, in which a rotary acceleration sensor (3.3), which supplies rotary acceleration measurement values (α) to the calculator unit (2), is additionally or optionally provided.

6. A feedback arrangement according to any one of claims 1 to 5, in which a temperature sensor (3.n), which supplies temperature measurement values (θ) to the calculator unit (2), is additionally provided.

7. A feedback method of regulating a servo motor, in which at least one rotary angle measurement value and at least one rotational speed measurement value are measured, in which rotary angle correction values are stored, in which the rotary angle measurement values are corrected in a manner corresponding to the stored rotary angle correction values and in which actual rotary angle values and/or actual rotational speed values are made available to regulate the servo motor, **characterized in that** the rotational speed measurement value is integrated in terms of time, the rotational speed measurement value integrated in terms of time is compared with the rotary angle measurement value in order to calculate the rotary angle correction values in each case, the actual rotary angle values made available for regulation are the corrected rotary angle measurement values at high speeds of rotation and the integrated rotational speed measurement values at low speeds of rotation, and the actual rotational speed values made available for regulation are the corrected rotary angle measurement values differentiated in accordance with the time at high speeds of rotation and the rotational speed measurement values at low speeds of rotation.

## Revendications

1. Dispositif de feedback pour permettre la régulation d'un servomoteur comprenant au moins un capteur d'angle de rotation (3.2) et au moins un capteur de vitesse de lacet (3.1), dans lequel le capteur d'angle de rotation (3.2) transmet une valeur de mesure de l'angle de rotation (ϕ) à une unité de calcul (2) dans laquelle sont enregistrées des valeurs de correction de l'angle de rotation, et pour permettre la régulation, on peut disposer de valeurs réelles de l'angle de rotation et/ou de valeurs réelles de la vitesse de rotation, qui sont calibrées au moyen des valeurs de correction de l'angle de rotation enregistrées, **caractérisé en ce que**
le capteur de vitesse de lacet (3.2) transmet une valeur de mesure de la vitesse de rotation (ω) à l'unité de calcul (2), dans l'unité de calcul (2) la valeur de mesure de la vitesse de rotation (ω) est intégrée pour former des angles de rotation de référence, les angles de rotation de référence sont comparés aux valeurs de mesure de l'angle de rotation (ϕ) pour calculer les valeurs de correction de l'angle de rotation, l'unité de calcul (2) met à disposition pour la régulation, en tant que valeur réelle de l'angle de rotation, pour des vitesses de rotation élevées les valeurs de mesure de l'angle de rotation calibrées, et pour des faibles vitesses de rotation, les valeurs de mesure de l'angle de rotation interpolées conformément aux valeurs de mesure de l'angle de rotation intégré, et l'unité de calcul (2) met à disposition pour la régulation en tant que valeur réelle de la vitesse de rotation, pour des vitesses de rotation élevées les valeurs de mesure de l'angle de rotation calibrées différenciées en fonction du temps, et, pour des faibles vitesses de rotation les valeurs de mesure de la vitesse de rotation.

2. Dispositif de feedback conforme à la revendication 1, dans lequel le capteur de vitesse de lacet (3.1) est un gyroscope optique.

3. Dispositif de feedback conforme à la revendication 2, dans lequel le gyroscope optique est un gyroscope à fibres optiques.

4. Dispositif de feedback conforme à l'une des revendications 1 à 3, dans lequel le capteur d'angle de rotation (3.2) présente une graduation dimensionnelle périodique par la détection de laquelle sont produit des signaux sinusoïdaux et cosinusoïdaux qui sont interpolés pour permettre la résolution angulaire.

5. Dispositif de feedback conforme à l'une des revendications précédentes, dans lequel en supplément ou en option il est prévu un capteur d'accélération angulaire (3.3) qui transmet des valeurs de mesure de l'accélération angulaire (α) à l'unité de calcul (2).

6. Dispositif de feedback conforme à l'une des revendications 1 à 5, dans lequel il est en outre prévu un capteur de température (3.n) qui transmet des valeurs de mesure de la température (θ) à l'unité de calcul (2).

7. Procédé de feedback pour permettre la régulation d'un servomoteur selon lequel au moins une valeur de mesure de l'angle de rotation et au moins une valeur de mesure de la vitesse de lacet sont mesurées, des valeurs de correction de l'angle de rotation sont enregistrées, les valeurs de mesure de l'angle de rotation sont corrigées en fonction des valeurs de correction de l'angle de rotation enregistrées, et des valeurs réelles de l'angle de rotation et/ou des valeurs réelles de la vitesse de rotation sont mises à disposition pour la régulation du servomoteur,
**caractérisé en ce que**
la valeur de mesure de la vitesse de rotation est intégrée en fonction du temps, la valeur de mesure de l'angle de rotation intégrée en fonction du temps est comparée à la vitesse de mesure de l'angle de rotation pour calculer respectivement la valeur de correction de l'angle de rotation, les valeurs réelles de l'angle de rotation mises à disposition pour la régulation sont pour des vitesses de rotation élevées, les valeurs de mesure de l'angle de rotation corrigées et pour des faibles vitesses de rotation les valeurs de mesure de la vitesse de rotation intégrées, et les valeurs réelles de la vitesse de rotation mises à disposition pour la régulation sont, pour des vitesses de rotation élevée, les valeurs de mesure de l'angle de rotation corrigées différenciées en fonction du temps, et pour des faibles vitesses de rotation les valeurs de mesure de la vitesse de rotation.
